# EUROPÄISCHE PATENTSCHRIFT

(11) **EP 3 052 360 B1**
(45) Veröffentlichungstag und Bekanntmachung des Hinweises auf die Patenterteilung: **20.03.2019**
(21) Anmeldenummer: 14784419.5
(22) Anmeldetag: 30.09.2014
(51) Int. Cl.: B60W 50/08, B62D 1/181, B60W 30/12, B60W 30/16

(54) **VERFAHREN FÜR EIN FAHRERASSISTENZSYSTEM EINES FAHRZEUGS**
METHOD FOR A DRIVER ASSISTANCE SYSTEM OF A VEHICLE
PROCÉDÉ POUR UN SYSTÈME D'AIDE À LA CONDUITE D'UN VÉHICULE

(30) Priorität: 01.10.2013 DE 102013110865
(43) Veröffentlichungstag der Anmeldung: 10.08.2016
(73) Patentinhaber: Volkswagen Aktiengesellschaft, 38440 Wolfsburg (DE)
(72) Erfinder: BENDEWALD, Lennart, 38442 Wolfsburg (DE); HACKENBERG, Linn, 38440 Wolfsburg (DE)
(74) Vertreter: Sticht, Andreas
(86) Internationale Anmeldenummer: PCT/EP2014/070980
(87) Internationale Veröffentlichungsnummer: WO 2015/049254

(56) Entgegenhaltungen:
- DE-A1-102006 006 995
- US-A1- 2013 002 416

## Beschreibung

Die vorliegende Erfindung betrifft ein Verfahren für ein Fahrerassistenzsystem eines Fahrzeugs sowie ein System zum Ansteuern eines Fahrerassistenzsystems in einem Fahrzeug. Die vorliegende Erfindung betrifft insbesondere Verfahren, um eine sogenannte Autopilotfunktion des Fahrerassistenzsystems zu aktivieren und zu deaktivieren.

Bei Fahrzeugen, wie zum Beispiel Personenkraftwagen oder Lastkraftwagen, werden zunehmend Fahrerassistenzsysteme eingesetzt, welche ein teilweises oder vollautomatisches Fahren des Fahrzeugs ermöglichen. Moderne oder zukünftige Fahrzeuge können daher in der Lage sein, unter bestimmten Bedingungen sowohl die Quer- als auch die Längsführung eingeständig zu übernehmen. Ein Fahrer des Fahrzeugs muss dabei diese automatische Führung des Fahrzeugs, welche auch als Autopilotfunktion bezeichnet wird, nicht dauerhaft überwachen, sondern kann zu einem geeigneten Zeitpunkt die Führung des Fahrzeugs an die Autopilotfunktion übergeben oder zurückholen.

Übliche Fahrerassistenzsysteme, wie zum Beispiel automatische Geschwindigkeitsregelungssysteme, insbesondere adaptive Geschwindigkeitsregelungssysteme, welche die Fahrzeuggeschwindigkeit an vorausfahrende Fahrzeuge anpassen, werden bisweilen per Lenkradtaste oder Lenkradbedienstock eingestellt und konfiguriert.

In diesem Zusammenhang offenbart die DE 10 2007 039 375 B4 ein Kraftfahrzeug umfassend ein es längsführendes Fahrerassistenzsystem mit Stop & Go-Funktion und einer Erfassungseinrichtung zum Erfassen von Informationen betreffend ein vorausfahrendes Fahrzeug. Mittels des Fahrerassistenzsystems ist das Kraftfahrzeug in Abhängigkeit der mittels der Erfassungseinrichtung erfassten Informationen automatisch in den Stand bremsbar und bei Erfassung der erneuten Anfahrt des vorausfahrenden Fahrzeugs in Abhängigkeit eines vom Fahrer über eine Eingabeeinrichtung gebbaren Betätigungssignals automatisch wieder anfahrbar.

Die DE 19 743 024 A1 betrifft ein Kraftfahrzeug mit Mitteln zur zeitweisen autonomen Fahrzeugführung und mit Mitteln zur Kommunikation eines Fahrzeugnutzers mit wenigstens einem elektronischen Kommunikationssystem. Dazu ist eine Bedieneinrichtung vorgesehen, durch welche die Kommunikationsmittel zwecks Durchführung eines Kommunikationsvorgangs und die Fahrzeugführungsmittel zwecks autonomer Fahrzeugführung aktivierbar sind. Die aktivierten Fahrzeugführungsmittel übermitteln bei Erkennen einer erforderlich werdenden manuellen Fahrzeugführung eine Übernahmeinformation an die Kommunikationsmittel, die diese Übernahmeinformation an einer Anzeigeeinrichtung anzeigen.

Die US 2013/0002416 A1 betrifft ein System zum Schalten zwischen einer manuellen Lenkbetriebsart und einer automatischen Lenkbetriebsart. Eine Lenkradanordnung sendet ein Signal an eine Steuereinheit für eine automatische Steuerung, um eine automatische Lenkbetriebsart zu aktivieren, wenn das Lenkrad in Richtung des Fahrers gezogen wird.

Die DE 10 2006 006 995 A1 betrifft ein Kraftfahrzeug mit einem Lenkrad und einem ein- und ausschaltbaren Autopilotsystem. Das Lenkrad ist in Abhängigkeit des Betriebszustands des Autopilotsystems zwischen einer geometrisch kleinen Form bei eingeschaltetem Autopilotsystem und einer geometrisch großen Form bei ausgeschaltetem Autopilotsystem automatisch verstellbar.

Mit einer Aktivierung bzw. Deaktivierung der Autopilotfunktion wird die Verantwortung zur Führung des Fahrzeugs in wesentlichen Anteilen auf die Fahrzeugelektronik bzw. den Fahrer übertragen. Eine Aktivierung bzw. Deaktivierung der Autopilotfunktion sollte daher nicht versehentlich erfolgen. Andererseits ist eine einfache und intuitive Verantwortungsübergabe an das Fahrzeug bzw. Verantwortungsrücknahme durch den Fahrer wünschenswert.

Aufgabe der vorliegenden Erfindung ist es daher, eine intuitive, einfach zu bedienende und sichere Verantwortungsübergabe zwischen einer Autopilotfunktion des Fahrzeugs und einem Fahrer bereitzustellen.

Die Aufgabe wird gemäß der vorliegenden Erfindung durch ein Verfahren für ein Fahrerassistenzsystem eines Fahrzeugs nach Anspruch 1, und ein System zum Ansteuern eines Fahrerassistenzsystems in einem Fahrzeug nach Anspruch 11 gelöst. Die abhängigen Ansprüche definieren bevorzugte und vorteilhafte Ausführungsformen der Erfindung. Erfindungsgemäß wird ein Verfahren für ein Fahrerassistenzsystem eines Fahrzeugs bereitgestellt. Das Fahrzeug umfasst ein Lenkrad, welches zwischen einer ersten Position und einer zweiten Position verstellbar ist. Das Lenkrad kann beispielsweise manuell von einem Fahrer beispielsweise auch während der Fahrt zwischen der ersten und zweiten Position verstellt werden. Alternativ oder zusätzlich kann das Lenkrad mit einem geeigneten Antrieb, beispielsweise einem elektrischen Antrieb, zwischen der ersten und zweiten Position verfahrbar sein, beispielsweise aufgrund einer Betätigung eines Bedienelements durch den Fahrer oder aufgrund einer Ansteuerung von dem Fahrerassistenzsystem. In der zweiten Position ist das Lenkrad weiter von einem auf einem Fahrersitz des Fahrzeugs sitzenden Benutzer entfernt als in der ersten Position. Anders ausgedrückt kann das Lenkrad manuell von dem Fahrer des Fahrzeugs in Richtung des Armaturenbretts weg bewegt werden oder zu dem Fahrer hingezogen werden. Wenn das Lenkrad in Richtung des Armaturenbretts von dem Fahrer weggeschoben wurde, befindet es sich in der zweiten Position. Ist es hingegen zu dem Fahrer hingezogen, befindet es sich in der ersten Position. Bei dem Verfahren wird eine aktuelle Position des Lenkrads erfasst und das Fahrerassistenzsystem in Abhängigkeit von der Position des Lenkrads eingestellt. Anders ausgedrückt wird das Fahrerassistenzsystem in Abhängigkeit davon eingestellt, ob sich das Lenkrad in der ersten Position oder in der zweiten Position befindet. Beispielsweise kann eine Autopilotfunktion des Fahrerassistenzsystems in Abhängigkeit von der Position des Lenkrads aktiviert oder deaktiviert werden.

Im Zusammenhang mit der vorliegenden Erfindung betrifft die Autopilotfunktion eine Funktion des Fahrerassistenzsystems, welche in der Lage ist, das Fahrzeug zumindest in bestimmten Situationen oder auf bestimmten Straßen, wie zum Beispiel Autobahnen oder Landstraßen, automatisch zu steuern. D.h., die Autopilotfunktion übernimmt die Längsführung und/oder die Querführung des Fahrzeugs und steuert das Fahrzeug ohne Eingreifen oder Zutun des Fahrers. Die Steuerung des Fahrzeugs mit Hilfe der Autopilotfunktion wird auch als hochautomatisiertes Fahren oder autonomes Fahren bezeichnet.

Die Autopilotfunktion ist, wie zuvor beschrieben, in der Lage, das Fahrzeug zumindest teilweise automatisch zu steuern, d.h. beispielsweise sowohl die Quer- als auch Längsführung eigenständig zu übernehmen. Die Autopilotfunktion kann Beispielsweise aktiviert werden, wenn sich das Lenkrad in der zweiten Position befindet, d.h., wenn das Lenkrad von dem Fahrer in Richtung des Armaturenbretts weggeschoben wurde. Umgekehrt kann die Autopilotfunktion deaktiviert werden, wenn sich das Lenkrad in der ersten Position befindet, d.h., wenn der Fahrer das Lenkrad wieder zu sich herangezogen hat. Dadurch kann eine intuitive Bedienung des Autopiloten erreicht werden. Durch wegschieben des Lenkrads wird die Verantwortung zur Fahrzeugführung weg von dem Benutzer hin zum Fahrzeug verschoben. Durch heranziehen des Lenkrads wird die Verantwortung zur Fahrzeugführung wieder zurück zum Fahrer geholt. Insbesondere ist eine schnelle Rückholung der Verantwortung durch Ziehen am Lenkrad möglich. Auch eine versehentliche Aktivierung oder Deaktivierung der Autopilotfunktion kann durch diese klare Bewegung des Lenkrads vermieden werden. Darüber hinaus kann durch die Stellung des Lenkrads auf einfache Art und Weise ein aktueller Aktivierungszustand der Autopilotfunktion erkannt werden. Wenn das Lenkrad in Richtung des Armaturenbretts verschoben ist, ist der Autopilot aktiv und zusätzlich ein erhöhtes Platzangebot für den Fahrer vorhanden. Wenn das Lenkrad in der ersten Position zu dem Fahrer hingezogen ist, befindet sich das Lenkrad in einer für den Fahrer gut bedienbaren Position zur Führung des Fahrzeugs.

Das Lenkrad ist zusätzlich automatisch verstellbar. Diese automatische Verstellung kann beispielsweise mit Hilfe einer motorisch angetriebenen Lenkradverstellung realisiert werden, welche bei dem Fahrzeug zur optimalen Justierung der Lenkradeinstellung für verschiedene Fahrer vorgesehen ist. Bei dem Verfahren wird das Lenkrad automatisch in die erste Position verstellt, wenn das Lenkrad von dem Benutzer oder Fahrer manuell teilweise von der zweiten Position in Richtung der ersten Position verstellt wird. Wenn der Fahrer beispielsweise die Autopilotfunktion deaktiviert und dazu das Lenkrad aus der zweiten Position an sich heranzieht, kann durch das automatische Verstellen des Lenkrads in die erste Position sichergestellt werden, dass das Lenkrad in eine für den Fahrer günstige Position zur Führung des Fahrzeugs geführt wird.

Gemäß einer Ausführungsform ist das Lenkrad in Richtung einer Längsachse einer Lenksäule des Fahrzeugs zwischen der ersten Position und der zweiten Position verstellbar. Eine derartige Verstellung ist bei vielen Fahrzeugen üblicherweise vorgesehen, um die Lenkradposition an Fahrer verschiedener Größen anpassen zu können. Darüber hinaus kann das Lenkrad auch durch eine Kippbewegung zwischen der ersten Position und der zweiten Position verstellbar sein, wenn in der Lenksäule des Fahrzeugs an geeigneter Stelle ein entsprechendes Gelenk vorgesehen ist. Bei Fahrzeugen mit einer elektronischen Lenkung, einem sogenannte Steer-by-Wire, kann das Lenkrad entlang einer beliebigen Trajektorie zwischen der ersten Position und der zweiten Position verstellbar sein, da in diesem Fall keine Lenksäule zur mechanischen Kopplung des Lenkrads mit einem Lenkgetriebe des Fahrzeugs vorhanden ist. Somit kann das zuvor beschriebene Verfahren je nach verfügbarer Verstellbarkeit des Lenkrads kostengünstig realisiert werden.

Wie zuvor beschrieben kann die Autopilotfunktion des Fahrerassistenzsystems in Abhängigkeit der aktuellen Position des Lenkrads aktiviert oder deaktiviert werden. Alternativ oder zusätzlich kann die Autopilotfunktion bereits durch die Bewegung des Lenkrads von der ersten Position in die zweite Position aktiviert werden und umgekehrt kann die Autopilotfunktion durch die Bewegung des Lenkrads von der zweiten Position in die erste Position deaktiviert werden. Die Aktivierung bzw. Deaktivierung der Autopilotfunktion kann somit bereits erfolgen, wenn der Fahrer das Lenkrad entlang einer Teilstrecke zwischen der ersten und zweiten Position von dem Fahrer weg bzw. auf den Fahrer zu bewegt. Die übrige Strecke zum Erreichen der ersten bzw. zweiten Position kann beispielsweise durch das automatische Verstellen des Lenkrads mittels eines motorischen Antriebs erfolgen.

Gemäß einer Ausführungsform sind an dem Lenkrad ein erstes Bedienelement und ein zweites Bedienelement angeordnet. Bei dem Verfahren wird eine Betätigung des ersten und zweiten Bedienelements erfasst und in Abhängigkeit von einer gleichzeitigen Betätigung des ersten und zweiten Bedienelements das Fahrerassistenzsystem eingestellt. Indem das Fahrerassistenzsystem nur eingestellt wird, wenn das erste und zweite Bedienelement gleichzeitig betätigt werden, kann eine versehentliche Einstellung oder Konfiguration des Fahrerassistenzsystems vermieden werden. Durch die Anordnung des ersten und zweiten Bedienelements an dem Lenkrad kann das Fahrerassistenzsystem auf einfache Art und Weise mit schnellem Zugriff eingestellt werden, ohne dass der Fahrer die Hände vom Lenkrad nehmen muss.

Gemäß einer Ausführungsform umfasst das Fahrerassistenzsystem eine Autopilotfunktion, welche in der Lage ist, das Fahrzeug zumindest teilweise automatisch zu steuern. Das Einstellen des Fahrerassistenzsystems erfolgt folgendermaßen in Abhängigkeit von der gleichzeitigen Betätigung des ersten und zweiten Bedienelements. Wenn das erste und zweite Bedienelement gleichzeitig betätigt werden und die Autopilotfunktion deaktiviert ist, wird die Autopilotfunktion aktiviert. Umgekehrt, wenn das erste und zweite Bedienelement gleichzeitig betätigt werden und die Autopilotfunktion aktiviert ist, wird die Autopilotfunktion deaktiviert. Indem die Autopilotfunktion nur dann aktiviert oder deaktiviert wird, wenn beide Bedienelemente gleichzeitig betätigt werden, kann eine versehentliche Aktivierung oder Deaktivierung der Autopilotfunktion vermieden werden.

Gemäß einer weiteren Ausführungsform umfasst das erste Bedienelement eine erste Tastwippe und das zweite Bedienelement umfasst eine zweite Tastwippe. Die erste und zweite Tastwippe weisen jeweils einen ersten Druckbetätigungsbereich und einen zweiten Druckbetätigungsbereich auf. Die ersten Druckbetätigungsbereiche der ersten und zweiten Tastwippe können beispielsweise mit einem Symbol und/oder einem Schriftzug versehen sein, welche ein Einschalten oder Aktivieren der Autopilotfunktion kennzeichnen. Die zweiten Druckbetätigungsbereiche der ersten und zweiten Tastwippe können jeweils mit einem Symbol und/oder einem Schriftzug versehen sein, welche ein Deaktivieren der Autopilotfunktion kennzeichnen. Wenn gleichzeitig an der ersten und zweiten Tastwippe jeweils der erste Druckbetätigungsbereich betätigt wird, wird die Autopilotfunktion des Fahrerassistenzsystems aktiviert. Wenn hingegen an der ersten und zweiten Tastwippe der jeweilige zweite Druckbetätigungsbereich betätigt wird, wird die Autopilotfunktion deaktiviert. Indem die entsprechenden Druckbetätigungsbereiche an zwei Tastwippen gleichzeitig betätigt werden müssen, um die Autopilotfunktion zu aktivieren oder zu deaktivieren, kann eine versehentliche Aktivierung oder Deaktivierung vermieden werden. Durch das Anordnen der Tastwippen an dem Lenkrad kann eine einfache Bedienung sichergestellt werden.

Gemäß einer Ausführungsform ist das erste Bedienelement an einer ersten Speiche des Lenkrads angeordnet und das zweite Bedienelement an einer zweiten Speiche des Lenkrads angeordnet. Durch das Anordnen des ersten und zweiten Bedienelements an zwei unterschiedlichen Speichen des Lenkrads kann eine versehentliche Betätigung beider Bedienelemente mit einer Berührung durch eine Hand oder einen Finger vermieden werden. Anders ausgedrückt wird durch das Anordnen des ersten und zweiten Bedienelements an zwei unterschiedlichen Speichen des Lenkrads sichergestellt, dass das erste und zweite Bedienelement hinreichend beabstandet angeordnet sind, um eine versehentliche gleichzeitige Betätigung zu vermeiden.

Gemäß einer weiteren Ausführungsform ist ein Abstand zwischen dem ersten und dem zweiten Bedienelement derart, dass das erste und das zweite Bedienelement gleichzeitig mit den Fingern einer Hand des Benutzers betätigbar sind. Anders ausgedrückt sind das erste und zweite Bedienelement trotz ihrer beabstandeten Anordnung nur so weit voneinander entfernt angeordnet, dass sie beispielsweise mit zwei unterschiedlichen Fingern einer Hand gleichzeitig betätigt werden können, um auch einarmigen Fahrern oder einhändigen Fahrern eine Bedienung des Fahrerassistenzsystems zu ermöglichen. Der Abstand zwischen dem ersten und dem zweiten Bedienelement kann beispielsweise 5 - 10 cm betragen, sodass das erste und zweite Bedienelement beispielsweise mit Daumen und Zeigefinger einer Hand des Benutzers gleichzeitig betätigbar sind.

Das erste und zweite Bedienelement können insbesondere an Speichen des Lenkrads angeordnet werden, an welchen keine weiteren Bedienelemente angeordnet sind. An einem Lenkrad eines Fahrzeugs werden heutzutage üblicherweise eine Vielzahl von Bedienelementen zur Steuerung von beispielsweise einem Infotainmentsystem des Fahrzeugs oder eines Navigationssystems des Fahrzeugs angeordnet. Bei dieser Ausführungsform werden das erste Bedienelement und das zweite Bedienelement, mit welchem die Autopilotfunktion aktiviert oder deaktiviert werden kann, an Speichen angeordnet, an denen keine weiteren Bedienelemente von anderen Systemen des Fahrzeugs vorgesehen sind. Anders ausgedrückt sind Bedienelemente von beispielsweise einem Infotainmentsystem oder einem Navigationssystem des Fahrzeugs an weiteren Speichen des Lenkrads angeordnet. Durch diese klare Trennung zwischen Bedienelementen zur Aktivierung und Deaktivierung der Autopilotfunktion und Bedienelementen für übrige Funktionen des Fahrzeugs, wie zum Beispiel Infotainment- oder Navigationssystem, kann eine versehentliche Aktivierung oder Deaktivierung der Autopilotfunktion vermieden werden. Darüber hinaus sind das erste Bedienelement und das zweite Bedienelement schnell und zuverlässig betätigbar, um beispielsweise die Autopilotfunktion zu deaktivieren und die Fahrzeugführung durch den Fahrer des Fahrzeugs zu ermöglichen.

Weiterhin kann bei dem Verfahren ein Ende eines Autopilotstreckenabschnitts bestimmt werden. Entlang dem Autopilotstreckenabschnitt kann die Autopilotfunktion das Fahrzeug automatisch steuern und ab dem Ende des Autopilotstreckenabschnitts muss der Fahrer das Fahrzeug wieder steuern. Das Lenkrad wird bei einer Annäherung des Fahrzeugs an das Ende des Autopilotstreckenabschnitts automatisch von der zweiten Position in die erste Position verstellt. Dadurch wird der Fahrer intuitiv aufgefordert, die Fahraufgabe wieder zu übernehmen. Der Fahrer kann beispielsweise durch gleichzeitiges Betätigen der beiden Bedienelemente die Übernahme der Fahraufgabe quittieren, wodurch die Autopilotfunktion deaktiviert wird. Alternativ kann das Lenkrad Sensoren zum Erfassen einer Lenkradberührung durch den Fahrer aufweisen und der Fahrer kann durch Auflegen der Hände auf das Lenkrad die Übernahme der Fahraufgabe bestätigen.

Die zuvor beschriebenen Verfahren können beliebig miteinander kombiniert werden. Insbesondere kann das Verfahren, welches das manuell zwischen der ersten und zweiten Position verstellbare Lenkrad verwendet, mit dem Verfahren, welches das erste und das zweite Bedienelement verwendet, kombiniert werden, sodass ein Autopilot beispielsweise nur aktiviert wird, wenn sowohl das Lenkrad von dem Fahrer in Richtung Armaturenbrett weggeschoben wird und das erste und zweite Bedienelement gleichzeitig betätigt werden. Alternativ kann die Autopilotfunktion auch aktiviert werden, wenn beispielsweise entweder das Lenkrad von der ersten Position in die zweite Position von dem Fahrer weggeschoben wird oder das erste und zweite Bedienelement gleichzeitig betätigt werden.

Gemäß der vorliegenden Erfindung wird weiterhin ein System zum Ansteuern eines Fahrerassistenzsystems in einem Fahrzeug bereitgestellt. Das System umfasst ein Lenkrad, welches zwischen einer ersten Position und einer zweiten Position verstellbar ist. Das Lenkrad ist in der zweiten Position weiter von einem auf einem Fahrersitz des Fahrzeugs sitzenden Benutzer entfernt als in der ersten Position. Das System umfasst weiterhin eine Erfassungsvorrichtung zur Erfassung der Position des Lenkrads und eine Verarbeitungsvorrichtung, welche ausgestaltet ist, das Fahrerassistenzsystem in Abhängigkeit von der Position des Lenkrads einzustellen. Das System ist somit zur Durchführung des zuvor beschriebenen Verfahrens geeignet und umfasst daher auch die Vorteile, welche zuvor bei der Beschreibung des erfindungsgemäßen Verfahrens genannt wurden.

Erfindungsgemäß wird weiterhin ein Fahrzeug bereitgestellt, welches ein Fahrerassistenzsystem und das zuvor beschriebene System umfasst.

Die vorliegende Erfindung wird nachfolgend unter Bezugnahme auf die beigefügte Zeichnung im Detail beschrieben werden.
Fig. 1 zeigt schematisch ein Fahrzeug gemäß einer Ausführungsform der vorliegenden Erfindung.
Fig. 2 zeigt ein Lenkrad eines Systems zum Ansteuern eines Fahrerassistenzsystems gemäß einer Ausführungsform der vorliegenden Erfindung.
Fig. 3 zeigt ein Verfahren für ein Fahrerassistenzsystem gemäß einer Ausführungsform der vorliegenden Erfindung.
Fig. 4 zeigt ein Lenkrad eines Systems zum Ansteuern eines Fahrerassistenzsystems gemäß einer weiteren Ausführungsform der vorliegenden Erfindung.
Fig. 5 zeigt ein Verfahren für ein Fahrerassistenzsystem gemäß einer weiteren Ausführungsform der vorliegenden Erfindung.

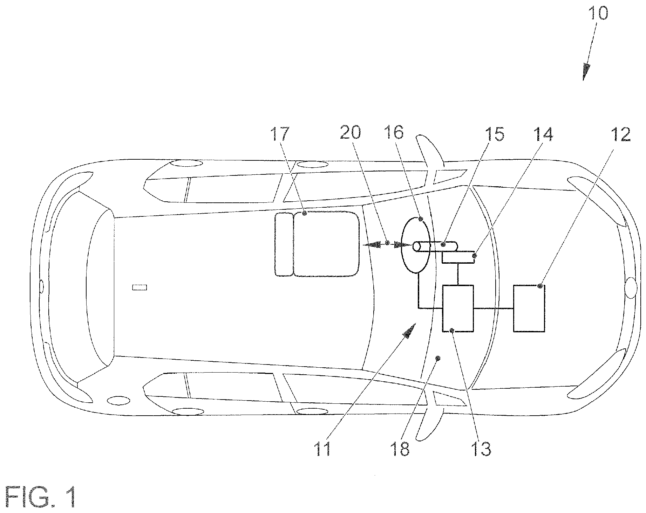

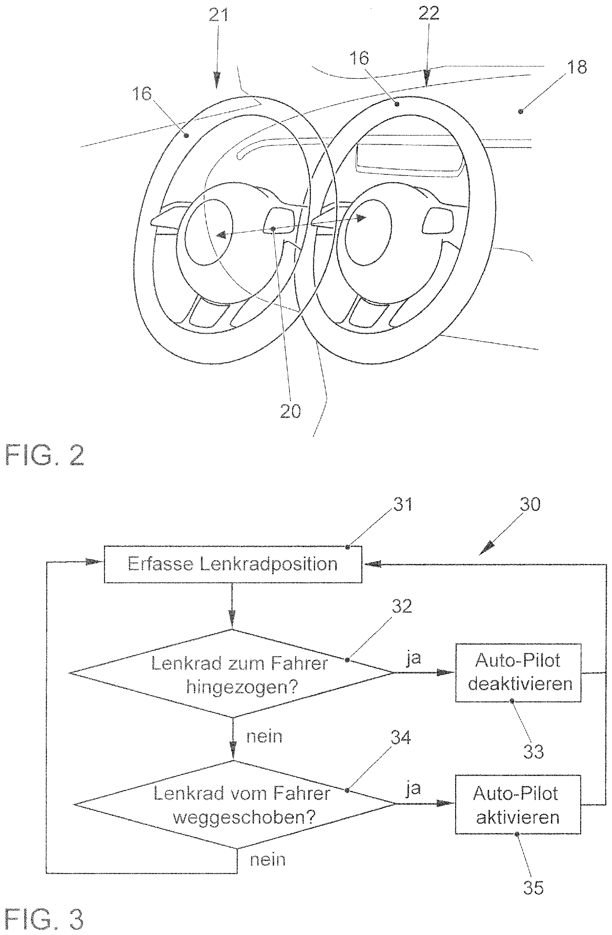

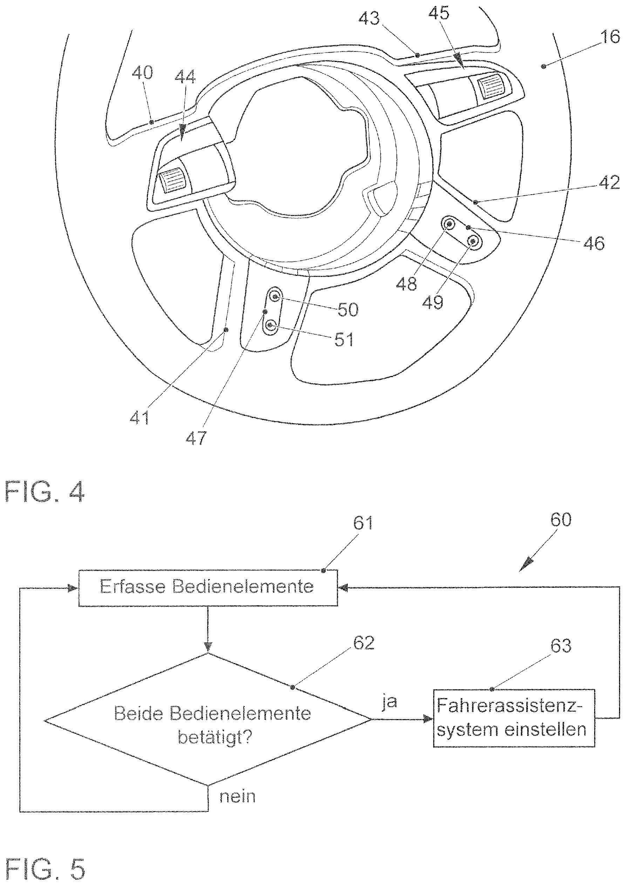

Fig. 1 zeigt ein Fahrzeug 10 mit einem Fahrerassistenzsystem 12 und einem System 11 zum Ansteuern des Fahrerassistenzsystems 12. Das Fahrerassistenzsystem 12 umfasst insbesondere eine sogenannte Autopilotfunktion, welche sowohl die Quer- als auch die Längsführung des Fahrzeugs 10 zumindest unter bestimmten Bedingungen eigenständig übernehmen kann. Das System 11 dient zum Aktivieren und Deaktivieren dieser Autopilotfunktion in Abhängigkeit von einer Interaktion zwischen einem auf einem Fahrersitz 17 sitzenden Fahrer und einem Lenkrad 16 des Fahrzeugs 10. Zur Erfassung dieser Interaktion umfasst das System 11 eine Erfassungsvorrichtung 14, welche beispielsweise mit einer Lenksäule des Lenkrads gekoppelt ist, um eine aktuelle Position des Lenkrads 16 zu erfassen. Ferner umfasst das System 11 eine Verarbeitungsvorrichtung 13, welche das Fahrerassistenzsystem 12 ansteuert. Die Verarbeitungsvorrichtung 13 kann mit der Erfassungsvorrichtung 14 und/oder mit (in Fig. 1 nicht gezeigten) Bedienelementen an dem Lenkrad 16 gekoppelt sein. Ferner ist in Fig. 1 ein Armaturenbrett 18 gezeigt, welches aus Sicht des auf dem Fahrersitz 17 sitzenden Fahrers hinter dem Lenkrad 16 angeordnet ist. Nachfolgend wird unter Bezugnahme auf die Figuren 2 und 3 eine erste Ausführungsform zum Aktivieren und Deaktivieren der Autopilotfunktion des Fahrerassistenzsystems 12 beschrieben werden und unter Bezugnahme auf die Figuren 4 und 5 eine zweite Ausführungsform zur Aktivierung und Deaktivierung der Autopilotfunktion beschrieben werden. Die beiden Ausführungsformen können unabhängig voneinander realisiert werden oder in Kombination, da sie sich sehr gut ergänzen.

Fig. 2 zeigt eine teilweise Innenraumansicht des Fahrzeugs 10. Dargestellt ist das Armaturenbrett 18 mit dem davor angeordneten Lenkrad 16. Das Lenkrad 16 ist entlang einem Pfeil 20 verschiebbar und in Fig. 2 in zwei unterschiedlichen Positionen 21, 22 dargestellt. In der ersten Position 21 befindet sich das Lenkrad 16 dichter an dem auf dem Fahrersitz 17 sitzenden Fahrer als in der zweiten Position 22. Anders ausgedrückt befindet sich das Lenkrad 16 in der zweiten Position 22 dichter an dem Armaturenbrett 18 als in der ersten Position 21. Das Lenkrad 16 ist manuell von dem Fahrer entlang dem Pfeil 20 zwischen der ersten Position 21 und der zweiten Position 22 verschiebbar. Die Erfassungsvorrichtung 14 ist in der Lage, eine aktuelle Position des Lenkrads 16 in Bezug auf die Verschiebung in Richtung des Pfeils 20 zu bestimmen. Die Verarbeitungsvorrichtung 13 wertet die erfasste Lenkradposition aus und steuert das Fahrerassistenzsystem 12 entsprechend an.

Die Arbeitsweise der Verarbeitungsvorrichtung 13 wird nachfolgend unter Bezugnahme auf Fig. 3 im Detail beschrieben werden. Fig. 3 zeigt ein Verfahren 30, welches von der Verarbeitungsvorrichtung 13 ausgeführt wird. Im Schritt 31 wird eine aktuelle Lenkradposition in Bezug auf die Bewegung des Lenkrads 16 in Richtung des Pfeils 20 bestimmt. Im Schritt 32 wird bestimmt, ob das Lenkrad 16 zum Fahrer hingezogen wird, d.h., ob sich das Lenkrad 16 in der ersten Position 21 befindet oder zumindest entlang einer bestimmten Strecke entlang dem Pfeil 20 von der zweiten Position 22 zu der ersten Position 21 bewegt wird. Wenn das Lenkrad zu dem Fahrer hingezogen wird, wird im Schritt 33 die Autopilotfunktion des Fahrerassistenzsystems 12 deaktiviert. Anderenfalls wird im Schritt 34 überprüft, ob das Lenkrad vom Fahrer weggeschoben wird, d.h., ob sich das Lenkrad in der zweiten Position 22 befindet oder zumindest für eine bestimmte Wegstrecke entlang dem Pfeil 20 aus der ersten Position 21 in Richtung der zweiten Position 22 bewegt wurde. In diesem Fall wird im Schritt 35 die Autopilotfunktion des Fahrerassistenzsystems 12 aktiviert. Danach wird das Verfahren im Schritt 31 mit einer erneuten Erfassung der aktuellen Lenkradposition fortgesetzt.

Die einfache, beispielsweise eindimensionale, Verschiebbarkeit des Lenkrads hin zum Armaturenbrett 18 bzw. weg von dem Armaturenbrett 18 ermöglicht eine intuitive Aktivierung und Deaktivierung der Autopilotfunktion. Durch das Wegschieben des Lenkrads vom Fahrer kann der Autopilot aktiviert werden und durch das Heranziehen des Lenkrads an den Fahrer kann die Autopilotfunktion deaktiviert werden. Eine derartige Metapher der Verantwortungsübergabe an das Fahrzeug, indem der Fahrer das Lenkrad 16 in Richtung Fahrzeug verschiebt oder in Richtung Fahrer zurückholt, ist äußert verständlich und intuitiv. Ferner ermöglicht das Heranziehen des Lenkrads 16 eine sehr schnelle Beendigung der von der Autopilotfunktion übernommenen Fahrt. Dies kann in kritischen Fahrsituationen vorteilhaft sein. Durch die aktuelle Position des Lenkrads 16 wird darüber hinaus der Aktivierungszustand der Autopilotfunktion einfach und klar vermittelt. Weiterhin erhöht die Verschiebung des Lenkrads 16 hin zu dem Armaturenbrett 18 das Platzangebot im Bereich des Fahrers, wenn die Autopilotfunktion aktiviert ist.

Wie zuvor beschrieben kann das Lenkrad 16 entlang dem Pfeil 20 zwischen der ersten Position 21 und der zweiten Position 22 manuell von einem Fahrer des Fahrzeugs 10 bewegt werden, um die Autopilotfunktion zu aktivieren oder zu deaktivieren. Zusätzlich kann das Lenkrad 16 eine automatische Verstellung aufweisen, welche beispielsweise elektromotorisch angetrieben ist. Diese automatische Verstellung kann beispielsweise das Lenkrad automatisch in die erste Position 21 oder die zweiten Position 22 verfahren, wenn der Fahrer das Lenkrad 16 zumindest entlang einer bestimmten Wegstrecke in Richtung der entsprechenden Position 21 oder 22 verschoben hat. Dadurch kann sichergestellt werden, dass sich das Lenkrad 16 bei deaktivierter Autopilotfunktion in einer für den Fahrer geeigneten Bedienposition befindet und bei aktivierter Autopilotfunktion ein maximales Platzangebot im Bereich vor dem Fahrer bereitgestellt wird.

Unter Bezugnahme auf Figuren 4 und 5 wird ein weiteres Verfahren zur Aktivierung bzw. Deaktivierung der Autopilotfunktion des Fahrerassistenzsystems 12 beschrieben. Fig. 4 zeigt das Lenkrad 16 im Detail. Das Lenkrad 16 weist vier Speichen 40 - 43 auf. An den Speichen 40 und 43 sind übliche Bedienelemente 44 bzw. 45 zur Bedienung von beispielsweise einem Infotainmentsystem des Fahrzeugs 10 vorgesehen. An den Speichen 41 und 42 sind Bedienelemente 46 und 47 vorgesehen, welche zur Aktivierung bzw. Deaktivierung der Autopilotfunktion verwendet werden. Diese Anordnung der Bedienelemente 46, 47 an separaten Speichen 41, 42 des Lenkrads 16 ermöglicht eine klare Funktionszuordnung. Das Trennen der Bedienelemente 46, 47 für die Bedienung der Autopilotfunktion von den übrigen Bedienelementen 44, 45 vermeidet eine versehentliche Aktivierung oder Deaktivierung der Autopilotfunktion.

Um ein versehentliches Aktivieren oder Deaktivieren der Autopilotfunktion zu vermeiden, ist ferner eine gleichzeitige Betätigung der Bedienelemente 46 ,47 erforderlich. Fig. 5 zeigt ein entsprechendes Verfahren 60, bei dem im Schritt 61 ein Betätigungszustand der Bedienelemente 46, 47 erfasst wird und im Schritt 62 überprüft wird, ob beide Bedienelemente 46, 47 betätigt werden. Nur wenn beide Bedienelemente 46, 47 betätigt werden, wird das Fahrerassistenzsystem 12 im Schritt 63 gemäß der Betätigung der beiden Bedienelemente 46, 47 eingestellt. Beispielsweise kann bei einem gleichzeitigen Betätigen der Bedienelemente 46, 47 die Autopilotfunktion abwechselnd aktiviert und deaktiviert werden, d.h., wenn die Autopilotfunktion deaktiviert ist, wird sie durch gleichzeitiges Betätigen der Bedienelemente 46, 47 aktiviert, und wenn die Autopilotfunktion aktiviert ist, wird sie durch gleichzeitiges Betätigen der Bedienelemente 46, 47 deaktiviert. In diesem Fall genügt es, das die Bedienelemente 46, 47 jeweils einen Tastschalter umfassen.

Die Bedienelemente 46, 47 können jedoch auch, wie es beispielsweise in Fig. 4 dargestellt ist, jeweils eine sogenannte Tastwippe aufweisen. Bei dieser Ausführungsform umfasst das erste Bedienelement 46 eine Tastwippe mit einem ersten Druckbetätigungsbereich 48 und einem zweiten Druckbetätigungsbereich 49. Der erste Druckbetätigungsbereich 48 kann beispielsweise ein Symbol oder einen Schriftzug zum Aktivieren der Autopilotfunktion aufweisen und der zweite Druckbetätigungsbereich 49 kann ein entsprechendes Symbol oder einen entsprechenden Schriftzug zum Deaktivieren der Autopilotfunktion aufweisen. Das zweite Bedienelement 47 weist ebenfalls einen ersten Druckbetätigungsbereich 50 und einen zweiten Druckbetätigungsbereich 51 auf. Wiederum kann der erste Druckbetätigungsbereich 50 mit einem Symbol oder Schriftzug zum Aktivieren der Autopilotfunktion versehen sein und der zweite Druckbetätigungsbereich 51 mit einem Symbol oder Schriftzug zum Deaktivieren der Autopilotfunktion. Um die Autopilotfunktion zu aktivieren betätigt ein Fahrer gleichzeitig die ersten Druckbetätigungsbereiche 48 und 50 und zum Deaktivieren der Autopilotfunktion betätigt ein Fahrer gleichzeitig die zweiten Druckbetätigungsbereiche 49 und 51. Dadurch kann ein versehentliches Aktivieren oder Deaktivieren der Autopilotfunktion zuverlässig verhindert werden.

Die zuvor beschriebenen Ausführungsformen können miteinander kombiniert werden. Beispielsweise wird bei einer derartigen Kombination die Autopilotfunktion dann aktiviert, wenn die beiden ersten Druckbetätigungsbereiche 48 und 50 gleichzeitig betätigt werden und gleichzeitig das Lenkrad 16 von der ersten Position 21 in die zweite Position 22 verschoben wird. Die Autopilotfunktion kann deaktiviert werden, indem die beiden zweiten Druckbetätigungsbereiche 49 und 51 gleichzeitig betätigt werden und gleichzeitig das Lenkrad 16 von der zweiten Position 22 in Richtung des Fahrers in die erste Position 21 gezogen wird. Alternativ kann die Autopilotfunktion auch deaktiviert werden, wenn das Lenkrad auch ohne Betätigung der Bedienelemente 46, 47 von der zweiten Position 22 zu der ersten Position 21 gezogen wird, um beispielsweise eine schnelle Übernahme der Fahrzeugführung durch den Fahrer zu ermöglichen.

Ferner kann der Abstand der Bedienelemente 47, 49 an dem Lenkrad 16 derart gewählt werden, dass die Bedienelemente 46, 47 gleichzeitig mit den Fingern einer Hand, beispielsweise mit Daumen und Zeigefinger einer Hand, bedient werden können, um eine Bedienung durch Fahrer mit nur einer Hand zu ermöglichen.

Weiterhin kann das Lenkrad 16 zwischen der ersten Position 21 und der zweiten Position 22 mittels eines elektrischen Antriebs automatisch verstellbar sein. Das Lenkrad 16 kann, wenn die Autopilotfunktion durch Betätigen der Bedienelemente 46, 47 aktiviert wurde, von der ersten Position 21 in die zweite Position 22 automatisch verfahren werden. An der aktuellen Position des Lenkrads können der Fahrer und die Insassen einfach und intuitiv erkennen, ob sich das Fahrzeug 10 im Autopilotbetrieb oder im manuellen Betrieb befindet. Wenn die Autopilotfunktion feststellt, dass sich das Fahrzeug 10 einem Streckenabschnitt nähert, welcher nicht mit Hilfe der Autopilotfunktion durchfahren werden kann, sondern vom Fahrer manuell zu durchfahren ist, wird das Lenkrad 16 automatisch von der zweiten Position 22 in die erste Position 21 verstellt. Dadurch wird der Fahrer intuitiv aufgefordert, die Fahraufgabe wieder zu übernehmen. Der Fahrer kann beispielsweise durch gleichzeitiges Betätigen der beiden Bedienelemente 46, 47 die Übernahme der Fahraufgabe quittieren, wodurch die Autopilotfunktion deaktiviert wird. Alternativ kann das Lenkrad 16 Sensoren zum Erfassen einer Lenkradberührung durch den Fahrer aufweisen und der Fahrer kann durch Auflegen der Hände auf das Lenkrad 16 die Übernahme der Fahraufgabe bestätigen und die Autopilotfunktion deaktivieren.

### Bezugszeichenliste

- 10: Fahrzeug
- 11: System
- 12: Fahrerassistenzsystem
- 13: Verarbeitungsvorrichtung
- 14: Erfassungsvorrichtung
- 15: Lenksäule
- 16: Lenkrad
- 17: Fahrersitz
- 18: Armaturenbrett
- 20: Pfeil
- 21: erste Position
- 22: zweite Position
- 30: Verfahren
- 31-35: Schritt
- 40-43: Speiche
- 44: Bedienelement
- 45: Bedienelement
- 46: erstes Bedienelement
- 47: zweites Bedienelement
- 48: erster Druckbetätigungsbereich
- 49: zweiter Druckbetätigungsbereich
- 50: erster Druckbetätigungsbereich
- 51: zweiter Druckbetätigungsbereich
- 60: Verfahren
- 61-63: Schritt

## Patentansprüche

1. Verfahren für ein Fahrerassistenzsystem eines Fahrzeugs, wobei das Fahrzeug (10) ein Lenkrad (16) umfasst, welches zwischen einer ersten Position (21) und einer zweiten Position (22) verstellbar ist, wobei das Lenkrad (16) in der zweiten Position (22) weiter von einem auf einem Fahrersitz (17) des Fahrzeugs (10) sitzenden Benutzer entfernt ist als in der ersten Position (21), wobei das Verfahren umfasst:
- Erfassen einer Position eines Lenkrads (16), und
- Einstellen des Fahrerassistenzsystems (12) in Abhängigkeit von der Position des Lenkrads (16),
**dadurch gekennzeichnet, dass**
das Lenkrad (16) zusätzlich automatisch verstellbar ist und dass das Verfahren ferner umfasst:
- automatisches Verstellen des Lenkrads (16) in die erste Position (21), wenn das Lenkrad (16) von dem Benutzer manuell teilweise von der zweiten Position (22) in Richtung der ersten Position (21) verstellt wird.

2. Verfahren nach Anspruch 1, **dadurch gekennzeichnet, dass** das Einstellen des Fahrerassistenzsystems (12) umfasst:
- Aktivieren einer Autopilotfunktion des Fahrerassistenzsystems (12), wenn sich das Lenkrad (16) in der zweiten Position (22) befindet, wobei die Autopilotfunktion ausgestaltet ist, das Fahrzeug (10) zumindest teilweise automatisch zu steuern, und/oder
- Deaktivieren der Autopilotfunktion des Fahrerassistenzsystems (12), wenn sich das Lenkrad (16) in der ersten Position (21) befindet.

3. Verfahren nach einem der vorhergehenden Ansprüche, **dadurch gekennzeichnet, dass** das Lenkrad (16) in Richtung einer Längsachse einer Lenksäule (15) des Fahrzeugs (10) zwischen der ersten Position (21) und der zweiten Position (22) verstellbar ist.

4. Verfahren nach einem der vorhergehenden Ansprüche, wobei an dem Lenkrad (16) ein erstes Bedienelement (46) und ein zweites Bedienelement (47) angeordnet sind, **dadurch gekennzeichnet, dass** das Verfahren umfasst:
- Erfassen einer Betätigung des ersten und zweiten Bedienelements (46, 47), und
- Einstellen des Fahrerassistenzsystems (12) in Abhängigkeit von einer gleichzeitigen Betätigung des ersten und zweiten Bedienelements (46, 47).

5. Verfahren nach Anspruch 4, **dadurch gekennzeichnet, dass** das Einstellen des Fahrerassistenzsystems (12) umfasst:
- Aktivieren einer Autopilotfunktion des Fahrerassistenzsystems (12), wenn das erste und zweite Bedienelement (46, 47) gleichzeitig betätigt werden und die Autopilotfunktion deaktiviert ist, wobei die Autopilotfunktion ausgestaltet ist, das Fahrzeug (10) zumindest teilweise automatisch zu steuern, und/oder
- Deaktivieren der Autopilotfunktion des Fahrerassistenzsystems (12), wenn das erste und zweite Bedienelement (46, 47) gleichzeitig betätigt werden und die Autopilotfunktion aktiviert ist.

6. Verfahren nach Anspruch 4 oder 5, wobei das erste Bedienelement (46) eine erste Tastwippe umfasst und das zweite Bedienelement (47) eine zweite Tastwippe umfasst, wobei die erste und zweite Tastwippe jeweils einen ersten Druckbetätigungsbereich (48, 50) und einen zweiten Druckbetätigungsbereich (49, 51) aufweisen, **dadurch gekennzeichnet, dass** das Einstellen des Fahrerassistenzsystems (12) umfasst:
- Aktivieren einer Autopilotfunktion des Fahrerassistenzsystems (12), wenn gleichzeitig an der ersten und zweiten Tastwippe der jeweilige erste Druckbetätigungsbereich (48, 50) betätigt wird, wobei die Autopilotfunktion ausgestaltet ist, das Fahrzeug (10) zumindest teilweise automatisch zu steuern, und/oder
- Deaktivieren der Autopilotfunktion des Fahrerassistenzsystems (12), wenn an der ersten und zweiten Tastwippe der jeweilige zweite Druckbetätigungsbereich (49, 51) betätigt wird.

7. Verfahren nach einem der Ansprüche 4-6, **dadurch gekennzeichnet, dass** das erste Bedienelement (46) an einer ersten Speiche (42) des Lenkrads (16) angeordnet ist und das zweite Bedienelement (47) an einer zweiten Speiche (41) des Lenkrads (16) angeordnet ist.

8. Verfahren nach einem der Ansprüche 4-7, **dadurch gekennzeichnet, dass** ein Abstand zwischen dem ersten und dem zweiten Bedienelement (46, 47) derart ist, dass das erste und das zweite Bedienelement (46, 47) gleichzeitig mit den Fingern einer Hand eines Benutzers betätigbar sind.

9. Verfahren nach einem der Ansprüche 4-8, wobei das Lenkrad (16) automatisch zwischen der ersten Position (21) und der zweiten Position (22) verstellbar ist, **dadurch gekennzeichnet, dass** das Verfahren umfasst:
- automatisches Verstellen des Lenkrads von der ersten Position (21) in die zweite Position in Abhängigkeit von der gleichzeitigen Betätigung des ersten und zweiten Bedienelements (46, 47).

10. Verfahren nach Anspruch 9, **dadurch gekennzeichnet, dass** das Verfahren ferner umfasst:
- Bestimmen eines Endes eines Autopilotstreckenabschnitts, wobei die Autopilotfunktion ausgestaltet ist, das Fahrzeug entlang dem Autopilotstreckenabschnitt automatisch zu steuern, und
- automatisches Verstellen des Lenkrads von der zweiten Position (21) in die erste Position in Abhängigkeit von einer Annäherung des Fahrzeugs an das Ende des Autopilotstreckenabschnitts.

11. System zum Ansteuern eines Fahrerassistenzsystems in einem Fahrzeug, umfassend:
- ein Lenkrad (16), welches zwischen einer ersten Position (21) und einer zweiten Position (22) verstellbar ist, wobei das Lenkrad (16) in der zweiten Position (22) weiter von einem auf einem Fahrersitz (17) des Fahrzeugs (10) sitzenden Benutzer entfernt ist als in der ersten Position (21),
- eine Erfassungsvorrichtung (14) zur Erfassung der Position des Lenkrads (16), und
- eine Verarbeitungsvorrichtung (13), welche ausgestaltet ist, das Fahrerassistenzsystem (12) in Abhängigkeit von der Position des Lenkrads (16) einzustellen,
**dadurch gekennzeichnet, dass** das Lenkrad (16) zusätzlich automatisch verstellbar ist und die Verarbeitungsvorrichtung (13) ausgestaltet ist, das Lenkrad (16) automatisch in die erste Position (21) zu verstellen, wenn das Lenkrad (16) von dem Benutzer manuell teilweise von der zweiten Position (22) in Richtung der ersten Position (21) verstellt wird.

12. System nach Anspruch 11, **dadurch gekennzeichnet, dass** das System (11) zur Durchführung des Verfahrens nach einem der Ansprüche 1-10 ausgestaltet ist.

## Claims

1. Method for a driver assistance system of a vehicle, wherein the vehicle (10) comprises a steering wheel (16) which is adjustable between a first position (21) and a second position (22), the steering wheel (16) in the second position (22) being further away from a user sitting in a driver's seat (17) of the vehicle (10) than in the first position (21), wherein the method comprises:
- sensing the position of a steering wheel (16), and
- setting the driver assistance system (12) in dependence on the position of the steering wheel (16),
**characterized in that** the steering wheel (16) is additionally automatically adjustable and **in that** the method also comprises:
- automatically adjusting the steering wheel (16) into the first position (21) when the steering wheel (16) is manually adjusted by the user partially from the second position (22) in the direction of the first position (21).

2. Method according to Claim 1, **characterized in that** the setting of the driver assistance system (12) comprises:
- activating an autopilot function of the driver assistance system (12) when the steering wheel (16) is in the second position (22), the autopilot function being designed so as to control the vehicle (10) at least partially automatically, and/or
- deactivating the autopilot function of the driver assistance system (12) when the steering wheel (16) is in the first position (21).

3. Method according to either of the preceding claims, **characterized in that** the steering wheel (16) is adjustable between the first position (21) and the second position (22) in the direction of a longitudinal axis of a steering column (15) of the vehicle (10).

4. Method according to one of the preceding claims, wherein a first operator control element (46) and a second operator control element (47) are arranged on the steering wheel (16), **characterized in that** the method comprises:
- sensing an actuation of the first and second operator control elements (46, 47), and
- setting the driver assistance system (12) in dependence on a simultaneous actuation of the first and second operator control elements (46, 47).

5. Method according to Claim 4, **characterized in that** the setting of the driver assistance system (12) comprises:
- activating an autopilot function of the driver assistance system (12) when the first and second operator control elements (46, 47) are actuated simultaneously and the autopilot function is deactivated, the autopilot function being designed so as to control the vehicle (10) at least partially automatically, and/or
- deactivating the autopilot function of the driver assistance system (12) when the first and second operator control elements (46, 47) are actuated simultaneously and the autopilot function is activated.

6. Method according to Claim 4 or 5, wherein the first operator control element (46) comprises a first rocker switch and the second operator control element (47) comprises a second rocker switch, the first and second rocker switches respectively having a first pressure actuating region (48, 50) and a second pressure actuating region (49, 51), **characterized in that** the setting of the driver assistance system (12) comprises:
- activating an autopilot function of the driver assistance system (12) when the respective first pressure actuating regions (48, 50) on the first and second rocker switches are actuated simultaneously, the autopilot function being designed so as to control the vehicle (10) at least partially automatically, and/or
- deactivating the autopilot function of the driver assistance system (12) when the respective second pressure actuating regions (49, 51) on the first and second rocker switches are actuated.

7. Method according to one of Claims 4-6, **characterized in that** the first operator control element (46) is arranged on a first spoke (42) of the steering wheel (16) and the second operator control element (47) is arranged on a second spoke (41) of the steering wheel (16) .

8. Method according to one of Claims 4-7, **characterized in that** a distance between the first and second operator control elements (46, 47) is such that the first and second operator control elements (46, 47) can be actuated simultaneously with the fingers of one hand of a user.

9. Method according to one of Claims 4-8, wherein the steering wheel (16) is automatically adjustable between the first position (21) and the second position (22), **characterized in that** the method comprises:
- automatically adjusting the steering wheel from the first position (21) into the second position in dependence on the simultaneous actuation of the first and second operator control elements (46, 47).

10. Method according to Claim 9, **characterized in that** the method also comprises:
- determining an end of an autopilot portion of a route, the autopilot function being designed so as to control the vehicle automatically along the autopilot portion of a route, and
- automatically adjusting the steering wheel from the second position (21) into the first position in dependence on the vehicle approaching the end of the autopilot portion of a route.

11. System for activating a driver assistance system in a vehicle, comprising:
- a steering wheel (16) which is adjustable between a first position (21) and a second position (22), the steering wheel (16) in the second position (22) being further away from a user sitting in a driver's seat (17) of the vehicle (10) than in the first position (21),
- a sensing device (14) for sensing the position of the steering wheel (16), and
- a processing device (13) which is designed so as to set the driver assistance system (12) in dependence on the position of the steering wheel (16), **characterized in that** the steering wheel (16) is additionally automatically adjustable and the processing device (13) is designed to automatically adjust the steering wheel (16) into the first position (21) when the steering wheel (16) is manually adjusted by the user partially from the second position (22) in the direction of the first position (21).

12. System according to Claim 11, **characterized in that** the system (11) is designed for carrying out the method according to one of Claims 1-10.

## Revendications

1. Procédé pour un système d'aide à la conduite d'un véhicule, dans lequel le véhicule (10) comprend un volant (16) qui peut être déplacé entre une première position (21) et une deuxième position (22), dans lequel, dans la deuxième position (22), le volant (16) est plus éloigné d'un utilisateur assis sur un siège conducteur (17) du véhicule (10) que dans la première position (21),
dans lequel le procédé consiste à :
- détecter une position d'un volant (16), et
- régler le système d'aide à la conduite (12) en fonction de la position du volant (16),
**caractérisé en ce que** le volant (16) peut en outre être déplacé automatiquement et **en ce que** le procédé consiste en outre à :
- déplacer automatiquement le volant(16) vers la première position (21) lorsque le volant (16) est partiellement déplacé manuellement par l'utilisateur de la deuxième position (22) vers la première position (21).

2. Procédé selon la revendication 1, **caractérisé en ce que** le réglage du système d'aide à la conduite (12) consiste à :
- activer une fonction de pilote automatique du système d'aide à la conduite (12) lorsque le volant (16) est dans la deuxième position (22), dans lequel la fonction de pilote automatique est conçue pour commander au moins partiellement automatiquement le véhicule (10) et/ou
- désactiver la fonction de pilote automatique du système d'aide à la conduite (12) lorsque le volant (16) se trouve dans la première position (21).

3. Procédé selon l'une des revendications précédentes, **caractérisé en ce que** le volant (16) peut être déplacé entre la première position (21) et la deuxième position (22) dans la direction d'un axe longitudinal d'une colonne de direction (15) du véhicule (10) .

4. Procédé selon l'une des revendications précédentes, dans lequel un premier élément de commande (46) et un deuxième élément de commande (47) sont disposés sur le volant (16), **caractérisé en ce que** le procédé consiste à :
- détecter un actionnement des premier et deuxième éléments de commande (46, 47) ; et
- régler le système d'aide à la conduite (12) en réponse à un actionnement simultané des premier et deuxième éléments de commande (46, 47).

5. Procédé selon la revendication 4, **caractérisé en ce que** le réglage du système d'aide à la conduite (12) consiste à :
- activer une fonction de pilote automatique du système d'aide à la conduite (12) lorsque les premier et deuxième éléments de commande (46, 47) sont actionnés simultanément et lorsque la fonction de pilote automatique est désactivée, dans lequel la fonction de pilote automatique est conçue pour commander au moins partiellement automatiquement le véhicule (10) et/ou
- désactiver la fonction de pilote automatique du système d'aide à la conduite (12) lorsque les premier et deuxième éléments de commande (46, 47) sont actionnés simultanément et lorsque la fonction de pilote automatique est activée.

6. Procédé selon la revendication 4 ou 5, dans lequel le premier élément de commande (46) comprend un premier bouton à bascule et le deuxième élément de commande (47) comprend un deuxième bouton à bascule, dans lequel les premier et deuxièmes boutons à bascule présentent chacun une première plage d'actionnement par pression (48, 50) et une deuxième plage d'actionnement par pression (49, 51), **caractérisé en ce que** le réglage du système d'aide à la conduite (12) consiste à :
- activer une fonction de pilote automatique du système d'aide à la conduite (12) lorsque la première plage d'actionnement par pression (48, 50) respective est appliquée simultanément sur les premier et deuxième boutons à bascule, dans lequel la fonction de pilote automatique est conçue pour commander le véhicule (10) au moins partiellement automatiquement, et/ou
- désactiver la fonction de pilote automatique du système d'aide à la conduite (12) lorsque la deuxième plage d'actionnement de pression (49, 51) respective est appliquée sur les premier et deuxième boutons à bascule.

7. Procédé selon l'une des revendications 4-6, **caractérisé en ce que** le premier élément de commande (46) est disposé sur un premier rayon (42) du volant (16) et **en ce que** le deuxième élément de commande (47) est disposé sur un deuxième rayon (41) du volant (16).

8. Procédé selon l'une des revendications 4-7, **caractérisé en ce qu'**une distance entre les premier et deuxième éléments de commande (46, 47) est telle que les premier et deuxième éléments de commande (46, 47) sont actionnés simultanément par les doigts de la main de l'utilisateur.

9. Procédé selon l'une des revendications 4-8, dans lequel le volant (16) peut être déplacé automatiquement entre la première position (21) et la deuxième position (22), **caractérisé en ce que** le procédé consiste à :
- déplacer automatiquement le volant de la première position (21) vers la deuxième position en fonction de l'actionnement simultané des premier et deuxième éléments de commande (46, 47).

10. Procédé selon la revendication 9, **caractérisé en ce que** le procédé consiste en outre à :
- déterminer une fin d'une section de route avec pilote automatique, dans lequel la fonction de pilote automatique est conçue pour commander automatiquement le véhicule le long de la section de route avec pilote automatique, et
- déplacer automatiquement le volant de la deuxième position (21) vers la première position en réponse au fait que le véhicule s'approche de la fin de la section de route avec pilote automatique.

11. Système pour commander un système d'aide à la conduite dans un véhicule, comprenant :
- un volant (16) qui peut être déplacé entre une première position (21) et une deuxième position (22), dans lequel, dans la deuxième position (22), le volant (16) est plus éloigné d'un utilisateur assis sur un siège conducteur (17) du véhicule (10) que dans la première position (21),
- un dispositif de détection (14) pour détecter la position du volant (16), et
- un dispositif de traitement (13) qui est conçu pour régler le système d'aide à la conduite (12) en fonction de la position du volant (16),
**caractérisé en ce que** le volant (16) peut en outre être déplacé automatiquement et **en ce que** le dispositif de traitement (13) est conçu pour déplacer automatiquement le volant (16) vers la première position (21) lorsque le volant de direction (16) est partiellement déplacé manuellement par l'utilisateur de la deuxième position (22) vers la première position (21).

12. Système selon la revendication 11, **caractérisé en ce que** le système (11) est conçu pour mettre en oeuvre le procédé selon l'une des revendications 1-10.
